Europäisches Patentamt

European Patent Office

Office européen des brevets

(19)

(11) **EP 1 001 275 B1**

(12) **EUROPÄISCHE PATENTSCHRIFT**

(45) Veröffentlichungstag und Bekanntmachung des Hinweises auf die Patenterteilung:
**04.02.2004 Patentblatt 2004/06**

(51) Int Cl.⁷: **G01S 3/803**, G01S 3/801, G01S 3/802, G06N 3/04

(21) Anmeldenummer: **98124177.1**

(22) Anmeldetag: **21.12.1998**

(54) **Vorrichtung zum Bestimmen der Einfallsrichtung von zeitlich begrenzt auftretenden Schallwellen**

Apparatus for determining the angle of incidence of incoming time limited sound waves

Dispsitif pour déterminer l'angle d'incidence d'ondes acoustiques apparaisants qui sont limitées temporalement

(84) Benannte Vertragsstaaten:
**DE ES FR GB**

(30) Priorität: **09.11.1998 DE 19851474**

(43) Veröffentlichungstag der Anmeldung:
**17.05.2000 Patentblatt 2000/20**

(73) Patentinhaber: **ATLAS ELEKTRONIK GmbH**
**28305 Bremen (DE)**

(72) Erfinder:
• **Wicker, Kai**
  **28213 Bremen (DE)**
• **Arens, Egidius**
  **28832 Achim (DE)**
• **Koch, Torben**
  **28203 Bremen (DE)**

(56) Entgegenhaltungen:
DE-A- 19 612 503          US-A- 5 563 849

**Beschreibung**

Die Erfindung betrifft eine Vorrichtung zum Bestimmen der Einfallsrichtung zeitlich begrenzt auftretender Schallwellen der in Anspruch 1 genannten Art.

In der US-PS 5 563 849 ist ein akustisches Ortungssystem zum Verfolgen von Meerestieren angegeben, die akustische Signale aussenden. Am Boden eines Trägerfahrzeugs angeordnete Hydrofone werden zu Teilbasen zum Empfang der akustischen Signale zusammengefaßt und liefern die Ortungsergebnisse.

Der Empfang von Schallwellen, die innerhalb eines kurzen Zeitraums gesendet werden (wie z. B. Schallimpulse), ermöglicht auch die Peilung eines Wasserfahrzeugs auf dem eine sendende Aktivsonaranlage installiert ist. In dem Artikel "Classification and Identification - CAI - by Submarine Sonars" von L. Kühnle aus Naval Forces No. 6/1987 sind Ortungsmöglichkeiten eines U-Bootes zur Lagebestimmung beschrieben. Fahrgeräusche und gesendete Schallimpulse von Wasserfahrzeugen werden mit mehreren Sonarbasen empfangen, die an unterschiedlichen Orten an Bord des U-Bootes installiert sind und für unterschiedliche Empfangsfrequenzbereiche optimal ausgelegt sind.

Der Empfang von Schallwellen eines gesendeten Schallimpulses ermöglicht neben einer Peilung eine Analyse seines Signalinhalts und dadurch Rückschlüsse auf Sender und Wasserfahrzeug. Um diese wertvollen Informationen zu erhalten, ist an Bord des U-Boots eine spezielle Interceptbasis vorgesehen, wie sie beispielsweise in der DE-PS 196 12 503 beschrieben ist. Die Interceptbasis weist eine Zylinder- oder Tonnenform auf und eine sternförmige Anordnung von Trennwänden aus Reflektor- oder Absorbermaterial, mit denen Segmente gebildet werden. In jedem Segment ist ein einzelner Wandler oder mehrere Wandler in Form einer Teilbasis angeordnet. Durch diesen Aufbau erhält der einzelne Wandler oder die Teilbasen eine ausgeprägte Eigenrichtcharakteristik. Die Peilauflösung wird durch die Sektoren für die Segmente bestimmt. Empfangspegel der Teilbasen werden miteinander verglichen. Beim Empfang eines Sonarimpulses gibt der größte Empfangspegel die Peilung an. Eine Erhöhung der Peilgenauigkeit kann erreicht werden, indem zwischen Empfangspegeln benachbarter Sektoren interpoliert wird. Voraussetzung für eine Interpolation ist jedoch, daß alle Eigenrichtcharakteristiken gleiche Eigenschaften und in der Mitte des Sektors die größte Empfangsempfindlichkeit aufweisen.

Auch mit einer im Bug des U-Boots angeordneten Zylinderbasis eines Passivpanoramasonars oder mit einer an der Längsseite installierten Linearantenne, einem sogenannten Flank Array, oder mit einer der Außenkontur des U-Boots folgenden Wandleranordnung, einem sogenannten Conformal Array, werden Schallimpulse empfangen. Frequenzen der Schallwellen des Schallimpulses liegen häufig wesentlich über dem Frequenzbereich, für den Abstände von elektroakustischen Wandlern auf der Zylinderbasis oder dem Flank Array oder dem Conformal Array ausgelegt sind. Immer dann, wenn die Abstände der Wandler größer als die halbe empfangene Wellenlänge sind, weist die Richtcharakteristik außer der Hauptkeule Nebenkeulen gleicher Empfindlichkeit, sogenannte Grating-Lobes, auf. Bei Empfang von Schallwellen aus einer Grating-Lobe-Richtung täuscht das Richtcharakteristiksignal einen Empfang aus ihrer Hauptrichtung vor, eine Trennung durch Pegelvergleich ist nicht möglich. Es ist Aufgabe der vorliegenden Erfindung, ein Vorrichtung der eingangs genannten Art zu schaffen, beim dem die Einfallsrichtung von zeitlich begrenzt auftretenden Schallwellen auch dann sicher bestimmt werden kann, wenn ein Empfang über Grating-Lobes nicht ausgeschlossen werden kann oder die Eigenrichtcharakteristiken der Wandler oder Teilbasen der Empfangsanordnung abhängig von der Richtung einfallender Schallwellen unterschiedliche Eigenschaften aufweisen.

Diese Aufgabe wird erfindungsgemäß durch die Merkmale des Anspruchs 1 gelöst.

Beim Empfang von Schallwellen aus einer bestimmten Einfallsrichtung weisen Empfangssignale von Wandlern oder Teilbasen einer Empfangsanordnung aufgrund ihrer Eigenrichtcharakteristiken unterschiedliche Meßpegel auf. Diese Meßpegel bilden für jede Einfallsrichtung der Schallwellen ein anderes Meßpegelmuster. Zum Erzeugen eines Meßpegelmusters fährt ein Meßschiff mit Schallsender im Kreis um die Empfangsanordnung herum und sendet Schallwellen innerhalb eines vorgebbaren Zeitintervalls und Empfangsfrequenzbereichs. Die auf See aufgenommenen Meßpegelmuster werden zusammen mit den zugehörigen Einfallsrichtungen abgespeichert und bilden erfindungsgemäß Trainingsmuster für ein neuronales Netz. Das neuronale Netz wird mit den Meßpegeln so trainiert, daß es die zum Meßpegelmuster gehörende Einfallsrichtung als Ausgabewert ausgibt. Den Einfallsrichtungen von 0° bis 360° werden beispielsweise Ausgabewerte von 0 bis 1 zugeordnet. Das trainierte neuronale Netz wird in die Sonaranlage der Empfangsanordnung integriert. Bei Einsatz der Sonaranlage an Bord werden Empfangspegel der Eigenrichtcharakteristiken innerhalb des vorgegebenen Empfangsfrequenzbereichs an das trainierte Netz gelegt und dort mit dem antrainierten Wissen zu einer Ausgabe einer Einfallsrichtung verarbeitet.

Der Vorteil der erfindungsgemäßen Vorrichtung nach Anspruch 1 besteht darin, daß Pegel und keine Phasenbeziehungen von Empfangssignalen der Wandler oder Teilbasen auf der Empfangsanordnung zur Richtungsbestimmung ausgenutzt werden, da keine Richtcharakteristiken durch Laufzeit- oder Phasenkompensation der Empfangssignale gebildet werden. Die ankommende Schallwelle wird nicht durch die Konfiguration der Wandler auf der Empfangsanordnung räumlich abgetastet, sondern es wird die richtungsabhängige Empfangsempfindlichkeit der Wandler oder Teilbasen aufgrund ihrer Eigenrichtcharakteristik zur Richtungsbestimmung ausgenutzt. Abhängig von der Einfallsrichtung werden unterschiedliche Pegel an den Wandlern oder Teilbasen empfangen, deren Größenverteilung für jede Einfallsrichtung unterschiedlich und charakteristisch ist. Ein Muster der empfangenen Pegel ist abhängig von der geometrischen Lage der ausgewählten Wandler oder Teilbasen auf der Empfangsanordnung, jedoch unabhängig von Wandlerabständen zwischen benachbarten Wandlern auf der Empfangsanordnung. Ein großer Vorteil der erfindungsgemäßen Vorrichtung nach Anspruch 1 besteht darin, daß jede beliebige Empfangsanordnung einer Sonaranlage verwendet werden kann und die Richtungsbestimmung unabhängig vom Frequenzbereich erfolgt, für den die Wandler auf der Empfangsanlage optimal angeordnet sind. Es ist also möglich die Richtung einfallender Schallwellen auch oberhalb des Frequenzbereichs der Sonaranlage zu bestimmen, für den das Wandlerraster auf der Empfangsanordnung dimensioniert wurde.

Ein weiterer Vorteil der erfindungsgemäßen Vorrichtung nach Anspruch 1 besteht darin, daß die Peilgenauigkeit dadurch optimiert werden kann, daß die Trainingsdaten schmalbandig nur den Empfangsfrequenzbereich abdecken. Bei Einsatz eines Schallereignisses im Empfangsfrequenzbereich ist das Netz optimal angepaßt. Bei breitbandigem Empfang werden die Empfangspegel vorteilhaft auf den Empfangsfrequenzbereich durch einen Bandpass oder FFT-Analysator begrenzt.

Ein weiterer Vorteil besteht darin, daß ein schmalbandig trainiertes Netz auch dann eine eindeutige Einfallsrichtung angibt, wenn breitbandige, höherfrequente Empfangspegel ohne Frequenzbegrenzung angelegt werden. Eine völlig falsche Richtungsangabe wie bei Empfang über Grating-Lobes ist ausgeschlossen, so daß eine Nachrüstung mit einem trainierten Netz ohne Eingriff in die vorhandene Signalvorverarbeitung der Sonaranlage problemlos möglich ist.

Aus der europäischen Patentanmeldung EP 0 488 150 sind unterschiedliche neuronale Netze bekannt. Der Vorteil des Einsatzes eines neuronalen Netzes gemäß der Weiterbildung der erfindungsgemäßen Vorrichtung nach Anspruch 2 beruht darin, daß Meßpegelmuster durch Simulation oder durch auf See aufgezeichnete Daten erzeugt werden können, wobei dem Netz zum Training zu jedem Meßpegelmuster ein Soll-Ausgabewert für die zugehörige Einfallsrichtung angeboten wird. Die Differenz zwischen Ist-Ausgabewert des Netzes und Soll-Ausgabewert dient dazu, Gewichte der Verbindungen zwischen einer Eingangsschicht, sog. input-layer, mit Eingabeneuronen, sowie einer verdeckten Schicht, sog. hidden-layer, mit Neuronen und einer Ausgangsschicht, sog. output-layer, mit einem Ausgangsneuron schrittweise zu adaptieren.

Nach erfolgtem Lernvorgang befindet sich das erlernte "Wissen" des Netzes in den Gewichten der Verbindungen. Das trainierte Netz wird in die Sonaranlage integriert. Wird nun ein Muster von Empfangspegeln der Eigenrichtcharakteristiken an die Eingabeneuronen angelegt, so berechnet sich die Aktivierung jedes Neurons der hiddenlayer aus der Summe der Aktivierungen der einzelnen Eingabeneuronen multipliziert mit den Gewichten der jeweiligen Verbindungen und einer Aktivierungsfunktion. In gleicher Weise berechnet sich auch die Aktivierung des Ausgangsneurons und somit der Ausgabewert des Netzes, der die Einfallsrichtung der empfangenen Schallwellen bzw. die Peilung zum Ziel angibt.

Die größte Peilgenauigkeit wird erzielt, wenn die Meßpegel für die Trainingsdaten bei Seeversuchen mit der gleichen Sonaranlage ermittelt werden, in die anschließend das trainierte Netz integriert wird. Die Einfallsrichtung der Schallwellen und somit der Soll-Ausgabewert für die Peilung ist durch den Ort des Senders bekannt. Der besondere Vorteil der erfindungsgemäßen Weiterbildung der Vorrichtung nach Anspruch 3 besteht darin, daß alle durch den Einbau der Empfangsanordnung bedingten akustischen Eigenheiten bereits in den Trainingsdaten enthalten sind. Das Training des Netzes selbst erfolgt dann an einem speziellen Computer, bevor das trainierte Netz in die Sonaranlage eingegliedert wird.

Der Vorteil des Einsatzes eines trainierten neuronalen Netzes im Zusammenhang mit einer Interceptbasis zum Peilen von Sonarimpulsen gemäß der Weiterbildung der erfindungsgemäßen Vorrichtung nach Anspruch 4 besteht darin, daß eine Interceptbasis bereits für den Empfang von Schallimpulsen ausgelegt ist und der Frequenzbereich mit dem Empfangsfrequenzbereich übereinstimmt und daß Eigenheiten der Eigenrichtcharkteristiken der Empfangssektoren der Interceptbasis in das Wissen des trainierten Netzes eingegangen sind. Bei Einfall eines Schallimpulses aus Richtungen, die nicht mit einer der Hauptachsen der Sektoren zusammenfallen, erfolgt eine exakte Peilangabe nicht durch einen zusätzlichen Interpolationsalgorithmus, sondern durch das Netz selbst.

Die Angabe der Einfallsrichtung bei dieser Panorama-Anlage erfolgt gemäß der vorteilhaften Weiterbildung der erfindungsgemäßen Vorrichtung nach Anspruch 5 durch den Sinus und Kosinus des zugehörigen Peilwinkels. Der Vorteil besteht darin, daß eine kleine Änderung des Empfangspegelmusters aufgrund einer kleinen Änderung der Einfallsrichtung auch dann eine kleine Änderung der Ausgabewerte der beiden Ausgabeneuronen zur Folge hat, wenn sich der Peilwinkel von 359° auf 0° ändert. Interpolationsfehler des Netzes bei einer Zuordnung der Einfallsrichtungen auf Ausgabewerte von 0 bis 1 und einem Sprung der Ausgabewerte von 0,99 auf 0 aufgrund einer Peilwinkeländerung von 1° treten nicht auf, da jede geringe Änderung des Empfangspegelmusters auch in diesem kritischen Bereich nur eine geringe Änderung der Ausgabewerte zur Folge hat. Durch die Angabe des Sinus und Kosinus des Peilwinkels für Einfallsrichtung von 0° bis 360° ist jede Einfallsrichtung mit gleicher Genauigkeit eindeutig bestimmbar.

Ein Vorteil der Weiterbildung der erfindungsgemäßen Vorrichtung nach Anspruch 6 besteht darin, daß durch Einsatz eines trainierten neuronalen Netzes auch Empfangsanordnungen zum Bestimmen der Einfallsrichtung von Schallimpulsen verwendet werden können, die für einen Empfang von breitbandigen Fahrgeräuschen in einem wesentlich niedrigeren Frequenzbereich optimal ausgelegt sind. Wandler eines Conformal Array in Form einer Hufeisenbasis längs der Außenkontur eines U-Bootes werden erfindungsgemäß zu Teilbasen zusammengefaßt, die ggfs. durch eine entsprechende Signalvorverarbeitung ihrer Wandlerempfangssignale ausgeprägte Eigenrichtcharakteristiken in einem Peilbereich von +/- 180° in Bezug auf die Vorausrichtung aufweisen. Ebenso ist es möglich, Teilbasen eines Flank-Arrays oder einer PRS-Basis, die beide an der Längsseite eines U-Bootes angeordnet sind, für die Bestimmung von höherfrequenten Schallwellen oder Schallimpulsen mit einem darauf trainierten neuronalen Netz zu verwenden.

Zum Erzeugen von Trainingsdaten für das neuronale Netz werden Meßpegel der Teilbasen des Conformal Array oder des Flank Array oder der PRS-Basis bei Empfang von Sonarimpulsen aus unterschiedlichen Richtungen ermittelt, wie es in der vorteilhaften Weiterbildung der erfindungsgemäßen Vorrichtung nach Anspruch 7 angegeben ist, dabei fährt ein Schallsender um das U-Boot herum und sendet aus vorgebbaren Richtungen kurzzeitig breitbandiges Rauschen. Das trainierte Netz und die Sonaranlagen des Conformal Array, des Flank Array oder der PRS-Basis eröffnen die Möglichkeit, mit ein und derselben Sonaranlage nicht nur Zieldaten eines Wasserfahrzeugs aufgrund seines Fahrgeräusches, sondern auch durch ausgesendete Schallimpulse seiner Aktiv-Ortungsanlage zu bestimmen.

Eine weitere Möglichkeit, passiv ein Wasserfahrzeug zu orten, besteht darin, daß zufällig abgestrahlte Schallereignisse, z.B. durch Klappen einer Lucke oder andere mechanische Bewegungen an Bord des Schiffs, empfangen werden, die von kurzer Dauer sind. Gemäß der vorteilhaften Weiterbildung der erfindungsgemäßen Vorrichtung nach Anspruch 7 wird das neuronale Netz mit sogenannten Transienten, wie solche zufälligen Schallereignisse genannt werden, trainiert. Bei Empfang eines Transienten liefert das Ausgabeneuron des so trainierten neuronalen Netzes die Einfallsrichtung der so abgestrahlten Schallwellen.

Druck- und Temperatureinflüsse und der Einbauort der Empfangsanordnung können Eigenrichtcharakteristiken der Wandler oder Teilbasen beeinflussen. Durch die vorteilhafte Weiterbildung der erfindungsgemäßen Vorrichtung nach Anspruch 9 geht der Aufwand bei der Auswahl und Prüfung der Werkstoffe für die Empfangsanordnung zurück. Fertigungstoleranzen sind weiter zu fassen, ohne bei der Erfüllung von Spezifikationen, die für die Ortungsanlage festgelegt werden, Einbußen zu erleiden.

Der Vorteil der erfindungsgemäßen Vorrichtung nach Anspruch 10 besteht darin, daß für alle an Bord zu erfüllenden Ortungsaufgaben ein dafür optimal trainiertes Unternetz im neuronalen Netz auswählbar ist.

Die besten Peilergebnisse werden erzielt, wenn Meßpegel und Empfangspegel mit der gleichen Signalvorverarbeitung aus Empfangssignalen der Wandler oder Teilbasen ermittelt wurden. Eine vorteilhafte Signalvorverarbeitung gibt die erfindungsgemäße Weiterbildung nach Anspruch 11 an, bei der Empfangsignale, die innerhalb eines Zeitfensters liegen, in einem FFT-Analysator mit nachgeordneter Normierungsschaltung und ggf. einem Richtungsbildner in frequenzbegrenzte Meß- bzw. Empfangspegel vorverarbeitet werden. Das Zeitfenster ist so gewählt, daß eine Schallwellenfront die gesamte Empfangsanordnung in dieser Zeit überstrichen hat. So ist gewährleistet, daß auch ein sehr kurzes Schallereignis von sämtlichen Eigenrichtcharakteristiken während des Zeitfensters erfaßt wurde.

Frequenzlage und Frequenzumfang von Sonarimpulsen sind im allgemeinen bekannt und bilden den Empfangsfrequenzbereich, der für die Bestimmung der Einfallsrichtung von Schallimpulsen relevant ist. Gemäß der vorteilhaften Weiterbildung der erfindungsgemäßen Vorrichtung nach Anspruch 12 wird dieser Empfangsfrequenzbereich in Teilbänder unterteilt und für jedes Teilband ein trainiertes neuronales Unternetz im neuronalen Netz vorgesehen. Eine spezielle Empfangsfrequenz und Bandbreite eines vom Ziel abgestrahlten Sonarimpulses ist jedoch nicht bekannt. Durch die Aufteilung in Teilbänder ist mindestenes eines der Unternetze auf die Empfangspegel optimal trainiert, so daß die ausgegebene Einfallsrichtung des abgestrahlten Schallimpulses am Ausgabeneuron einen geringeren Fehler als bei einem breitbandig trainierten Netz aufweist.

Erfolgt das Training mit Meßpegeln, deren zugehörige Einfallsrichtungen nicht benachbart sind, sondern sich um große, auch unterschiedliche Winkelbeträge unterscheiden und in ihrer Reihenfolge zufällig sind, besteht der Vorteil der erfindungsgemäßen Weiterbildung entsprechend Anspruch 13 darin, daß ein Restfehler, der sich während des Lernprozesses einstellt, am kleinsten ist.

Bei der speziellen Auslegung des neuronalen Netzes gemäß der vorteilhaften Weiterbildung der erfindungsgemäßen Vorrichtung nach Anspruch 11 ist das Training des neuronalen Netzes auch mit der an Bord befindlichen Sonaranlage und dem dort verwendeten Rechner möglich, so daß ein spezielles Vorabtraining mit einer größeren Rechenanlage nicht mehr notwendig ist. Ein weiterer Vorteil besteht darin, daß durch die geringe Anzahl der Neuronen in der hidden-layer Rechenzeiten des Netzes gering sind. Die Signalvorverarbeitung für die Meßpegel und Empfangspegel ist die gleiche, nachdem die Sonaranlage nach der Trainingsphase auf Bordbetrieb umgeschaltet wird. Durch diese Vorgehensweise ist ein optimaler Einsatz des neuronalen Netzes garantiert.

Die Erfindung ist anhand eines Ausführungsbeispiels für eine Sonaranlage zum Bestimmen der Einfallsrichtung zeitlich begrenzt auftretender Schallwellen in der Zeichnung näher erläutert. Es zeigen:

Fig. 1    ein U-Boot mit Sonaranlagen,
Fig. 2    ein Blockschaltbild und

Fig. 3 ein modifiziertes Blockschaltbild

Fig. 4 ein erweitertes Blockschaltbild.

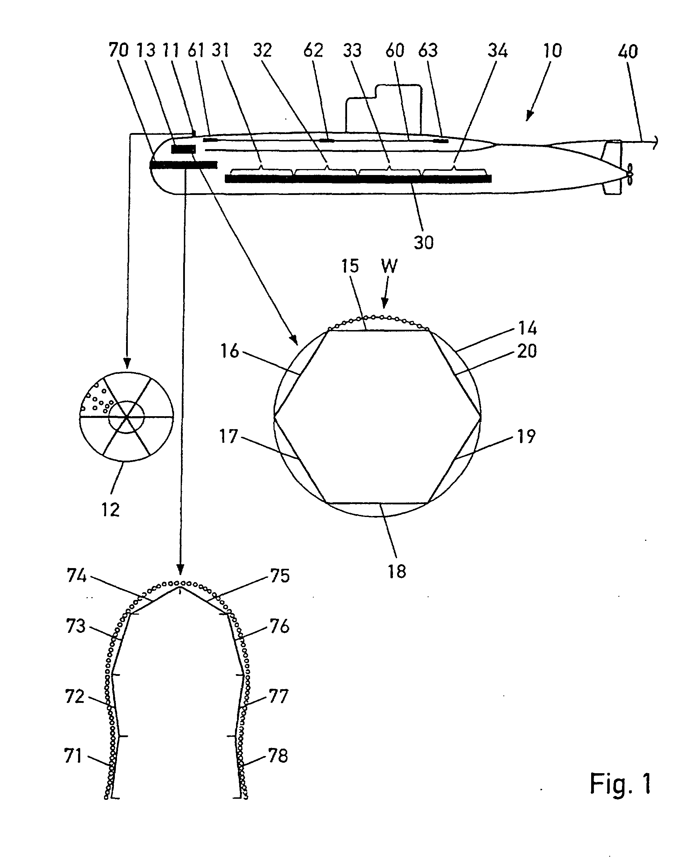

Zum Detektieren und Orten schallabstrahlender Ziele befinden sich auf einem U-Boot 10, das in Fig. 1 gezeigt ist, mehrere Sonaranlagen mit Empfangsanordnungen, die für den Empfang von Schallwellen in unterschiedlichen Frequenzbereichen optimal ausgelegt sind.

Eine Interceptbasis 11 im vorderen Bereich des U-Boots 10 empfängt hochfrequente Schallimpulse. Ihre Draufsicht 12 zeigt sechs Teilbasen in sechs Segmenten, die von schallwellenabsorbierenden Trennwänden begrenzt sind. Jede Teilbasis hat eine Eigenrichtcharakteristik, deren Empfangsempfindlichkeit in der Winkelhalbierenden des Segments am größten ist. Empfangspegel der über die sechs Eigenrichtcharakteristiken empfangenen Schallwellen sind abhängig von der Einfallsrichtung des hochfrequenten Schallimpulses. Ihr Muster ist für jede Einfallsrichtung charakteristisch. Diese Empfangspegel sind Eingangsdaten für ein auf die Interceptbasis 11 trainiertes neuronales Netz.

Bei einer Peilanlage mit einer Zylinderbasis 13 werden breitbandige Fahrgeräusche eines Wasserfahrzeugs ausgewertet. Zum Bestimmen der Einfallsrichtung eines Schallimpulses werden mit ausgewählten Wandlern Teilbasen auf der Zylinderbasis 13 gebildet. Diese Wandler liegen jeweils auf Bögen längs einer Kreislinie 14 der Zylinderbasis 13 über den Sehnen 15, 16, 17, 18, 19, 20. Die sechs Teilbasen weisen Eigenrichtcharakteristiken auf, deren Empfangsrichtungen um 60° versetzt sind. Öffnungswinkel der Eigenrichtcharakteristiken jeder Teilbasis werden durch die Länge der Sehne 15, 16 ... 20 und die Vorverarbeitung von Empfangssignalen der Wandler vor ihrer Summation so gewählt, daß der gesamte Horizont erfaßt wird.

Ein Muster der Empfangspegel der sechs Teilbasen ist ebenfalls wie bei der Interceptbasis 12 für jede Einfallsrichtung der Schallwellen unterschiedlich. Auch im höherfrequenten Empfangsbereich von Schallimpulsen, für den Wandlerabstände auf der Zylinderbasis 13 nicht optimal dimensioniert sind, ist ein Muster der Empfangspegel eindeutig einer Einfallsrichtung zuzuordnen. Die Empfangspegel sind Eingangsdaten für ein auf die Zylinderbasis 13 trainiertes neuronales Netz.

Auf beiden Längsseiten des U-Boots 10 ist eine Seitenantenne 30, ein sogenanntes Flank Array angeordnet, die für einen tieferen Frequenzbereich als die Zylinderbasis 13 ausgelegt ist. Auf dieser Empfangsanordnung werden auf jeder Seite des U-Boots Wandler zu Teilbasen 31, 32, 33, 34 mit ausgeprägter Eigenrichtcharakteristik durch Vorverarbeitung ihrer Empfangssignale zusammengefaßt, deren Empfangspegel bei Schalleinfall auch in einem wesentlich höher gelegenen Empfangsfrequenzbereich ein von der Einfallsrichtung abhängiges Muster aufweisen.

Drei Teilbasen 61, 62, 63 einer PRS-Basis, die ebenfalls beidseitig des U-Boots 10 angeordnet ist, gehören zu einer Sonaranlage zum passiven Bestimmung der Entfernung eines schallabstrahlenden Ziels. Die drei Teilbasen 61, 62, 63 beidseitig des U-Bootes 10 weisen ebenfalls ggf. nach einer Vorverarbeitung ihrer Empfangssignale ein für jede Einfallsrichtung signifikantes Muster ihrer Empfangspegel auf. Diese Empfangspegel der Teilbasen der Seitenantenne oder der PRS-Basis sind Eingangsdaten für ein darauf trainiertes neuronales Netz.

Ebenfalls ist es möglich, auf einer vom U-Boot 10 nachgezogenen Schleppantenne 40, die für den Empfang sehr tieffrequenter Schallwellen ausgelegt ist, Empfangspegel von einzelnen Wandlern oder Teilbasen mit ausgeprägter Eigenrichtcharakteristik zum Bestimmen der Einfallsrichtung höherfrequenter Schallwellen mit einem darauf trainierten neuronalen Netz zu verwenden.

Am Bug des U-Bootes 10 befindet sich außerdem ein Conformal Array in Form einer Hufeisenbasis 70, die zum Orten einer Schallquelle mit breitbandiger Abstrahlung von Schallwellen üblicherweise eingesetzt wird. Richtcharakteristiken dieser Hufeisenbasis 70 weisen beim Empfang von Schallwellen in einem Empfangsfrequenzbereich für Schallimpulse Grating-Lobes auf, da die Richtungsbildung in der zugehörigen Sonaranlage über Laufzeit- oder Phasenkompensation der Empfangsignale und anschließende Summation erfolgt.

Mit den Wandlern der Hufeisenbasis werden acht Teilbasen 71, 72, ... 78 gebildet, die unterschiedliche Basislängen aufweisen können.

Abhängig von der Lage der Teilbasen 71, 72, ... 78 auf der Hufeisenbasis 70 und der Vorverarbeitung ihrer Wandlerempfangssignale werden Eigenrichtcharakteristiken gebildet, deren Empfangspegel für jede Einfallsrichtung eine andere Verteilung aufweisen. Diese Empfangspegel sind Eingangsdaten für ein auf die Hufeisenbasis 70 trainiertes neuronales Netz.

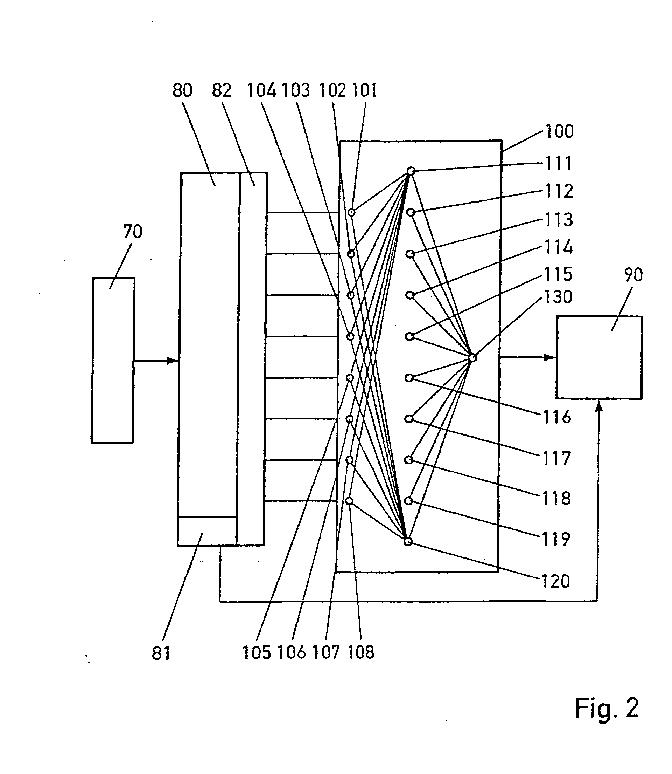

Fig. 2 zeigt ein Blockschaltbild einer Sonaranlage, in die ein trainiertes neuronales Netz 100 integriert ist. Der Einsatz eines solchen neuronalen Netzes 100 zur Bestimmung der Einfallsrichtung zeitlich begrenzter hochfrequenter Schallwellen wird im Zusammenhang mit der Hufeisenbasis 70 beschrieben. Die Sonaranlage enthält für Wandlerempfangsignale der Hufeisenbasis 70 eine Rechenschaltung 80 mit einem FFT-Analysator und nachgeschalteten Normierungsstufen sowie einen Richtungsbildner 81 mit einem Laufzeitkompensationsnet zwert zum Bestimmen der Einfallsrichtung breitbandiger Schallwellen in einem Frequenzbereich, für den die Hufeisenbasis 70 ausgelegt ist. Der Ausgang des Richtungsbildners 81 ist mit einer Anzeige 90 für eine Panorama-Lagedarstellung verbunden.

Die Rechenschaltung 80 enthält außerdem eine Impulserkennungseinheit, wie sie beispielsweise in der deutschen Patentanmeldung 197 45 726 angegeben ist. Bei Erkennen eines kurzzeitigen Schallereignisses, z.B. eines Sonarimpulses, wird eine Zusammenfassungsschaltung 82 über ein Zeittor für eine Zeit aktiviert, die der Laufzeit eines Schallimpulses über die Länge der Hufeisenbasis 70 angepaßt ist. In der Zusammenfassungsschaltung 82 werden Empfangssignale von Wandler der acht Teilbasen 71, 72,..... 78 aus der Rechenschaltung 80 zu normierten Empfangspegeln zusammengefaßt. An den Ausgängen der Zusammenfassungsschaltung 82 stehen die Empfangspegel der acht Teilbasen 71, 72, ... 78 an. Diese Empfangspegel liegen an Eingabeneuronen 101, 102, ... 108 einer input-layer des trainierten neuronalen Netzes 100 an.

Alle Eingabeneuronen 101, 102, ... 108 der input-layer sind über Verbindungen mit einem einzigen Neuron 111 einer hidden-layer des neuronalen Netzes 100 verbunden. Die Verbindungen weisen Gewichte für die Empfangspegel auf, die beim Training eines neuronalen Netzes 100 erlernt werden. Die Aktivierung des Neurons 111 in der hidden-layer berechnet sich aus den Empfangspegeln ai, i = 1, 2 ... 8 an den einzelnen Eingabeneuronen 101, 102, ... 108 multipliziert mit den beim Training angelernten Gewichten $W_i$ der jeweiligen Verbindungen der Eingabeneuronen 101, 102 .... 108 zu dem Neuron 111 und einer nichtlinearen Aktivierungsfunktion. Die Aktivierungsfunktion ist die logistische Funktion.

$$f(x) = \frac{1}{1+e^{-x}}, \; mit \; x = \sum_{i=1}^{8} W_i \cdot a_i(t)$$

Zehn Neuronen 111, 112, ... 120 der hidden-layer sind jeweils mit allen Eingabeneuronen 101, 102, ... 108 verbunden. Der Übersichtlichkeit halber ist dies nur für die Neuronen 111 und 120 gezeigt. Ausgangsseitig sind die Neuronen 111, 112, ..... 120 mit einem einzigen Ausgabeneuron 130 einer output-layer des neuronalen Netzes 100 verbunden. Das Ausgabeneuron 130 gibt Werte von 0 bis 1 abhängig vom Muster der Empfangspegel an den Eingabeneuronen 101, 102, ... 108 und dem erlernten Wissen des Netzes 100 aus, das sich in den Gewichten $W_i$ der Verbindungen nach dem Training des neuronalen Netzes 100 befindet. Dem Wertebereich von 0 bis 1 des Ausgabeneurons 130 sind Peilungen von +/- 180° bezogen auf die Vorausrichtung des U-Bootes 10 bzw. der Hufeisenbasis 70 zugeordnet. Dem Netz 100 ist die Anzeige 90 nachgeordnet, auf der zusätzlich zu einer Panoramaanzeige Einfallsrichtungen von Schallimpulsen bzw. Peilungen zu Zielen, die Schallimpulse aussenden, mit einer entsprechenden Markierung angezeigt werden.

Die Trainingsdaten des Netzes 100 werden entweder simuliert oder bei einer Meßfahrt auf See ermittelt. Ein Schallsender sendet bei der Meßfahrt unter einer bekannten Einfallsrichtung Schallimpulse aus, die mit den Teilbasen 71, 72, ... 78 empfangen und mit der Rechenstufe 80 und der Zusammenfassungsschaltung 82 zu normierten Meßpegeln weiterverarbeitet werden. Die Einfallsrichtungen und Meßpegel bilden die Trainingsdaten des Netzes 100. Beim Training werden Meßpegel an die Eingabeneuron 101, 102, ... 108 angelegt und über die Verbindungen zur hidden-layer zu Beginn mit zufällig eingestellten Gewichten bewertet. Die gewichteten Meßpegel werden an jedem Neuron 111, 112, .... 120 in der hidden-layer addiert. Jede Summe wird dann jeweils noch einmal gewichtet und an das Ausgabeneuron 103 der output-layer weitergegeben und addiert. Diese Summe ist die Ist-Ausgabe und wird mit der tatsächlichen Einfallsrichtung, nämlich der Soll-Ausgabe, verglichen. Das neuronale Netz 100 ist ein Feed Forward Netz. Sein Datenfluß hat nur eine Richtung. Das Training dieses Netzes 100 wird Supervised Learning genannt. Die bekannte Einfallsrichtung ist die Soll-Ausgabe. Die Ist-Ausgabe ist die vom Netz 100 ausgegebene Einfallsrichtung. Anhand des Vergleichs mit der Soll-Ausgabe werden die Gewichte so verändert, daß die nächste Ist-Ausgabe von der Soll-Ausgabe weniger abweicht. Dieser Vorgang wird so oft wiederholt, bis der Fehler zwischen Ist-Ausgabe und Soll-Ausgabe am kleinsten ist. Bei dieser sogenannten Error Backpropagation Methode wird der Ausgabefehler des Netzes 100 zurückverfolgt, um das Netz 100 zu trainieren.

Die Gewichtung erfolgt über eine Multiplikation mit einem Wichtungsfaktor, der anfangs zufällig gewählt ist und während des Lernvorgangs optimiert wird. Dieser Lernvorgang wird mit in zufälliger Reihenfolge ausgewählten Einfallsrichtungen und zugehörigen Meßpegelmustern als Trainingsdaten so oft wiederholt, bis die Ist-Ausgabe für die ausgewählte Einfallsrichtung so wenig wie möglich von der Soll-Ausgabe der Einfallsrichtung abweicht. Nach Abschluß des Trainings werden die Gewichtungen des Netzes 100 in die bestehende Sonaranlage eingegeben und nicht mehr verändert. Zur Implementation des Netzes 100 wird ein C-Source-Code-Fragment verwendet.

Die Eingabeneuronen 101, 102, .... 108 des trainierten neuronalen Netzes 100 werden im Betrieb an Bord mit Empfangspegeln am Ausgang der Zusammenfassungsschaltung 82 beaufschlagt. Abhängig vom Muster der Empfangspegel liefert das Ausgabeneuron 130 die Einfallsrichtung, die auf der Anzeige 90 als Zahlenwert ausgegeben oder als Peilstrahl in der Panoramaanzeige dargestellt wird.

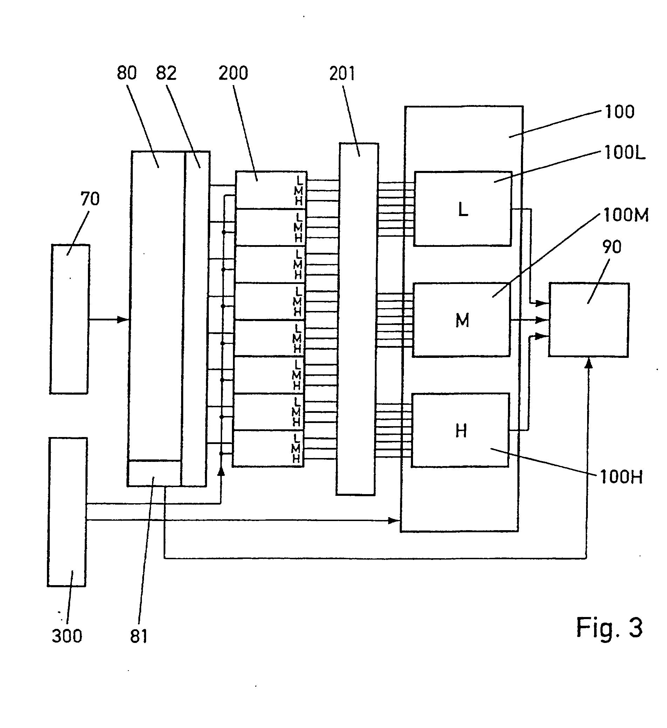

Eine zweite Möglichkeit, das neuronale Netz 100 zu trainieren, zeigt Fig. 3. Bei einer Meßfahrt ermittelte Meßpegel werden aus einem Speicher 300 in einer Frequenzverteilerschaltung 200 in drei Frequenzbereiche "low", "middle" und "high" aufgeteilt und in drei Unternetze 100L, 100M, 100H des neuronalen Netzes 100 eingespeist. Aus dem Speicher 300 wird außerdem der zu jedem Meßpegelsatz gehörige Ausgabewert an die Unternetze 100L, 100M und 100H des neuronalen Netzes 100 ausgegeben, der die Einfallsrichtung angibt. Das Training erfolgt mit Trainingsdaten, deren Reihenfolge zufällig ausgewählt wird. Nachdem die drei Unternetze 100L, 100M, 100H mit den Meßpegeln in den Teilbändern L, M und H trainiert wurden, wird zur Überprüfung des erlernten Wissens ein Schallimpuls von der Hufeisenbasis 70 aus einer bekannten Einfallsrichtung empfangen. Über die Vorverarbeitung der Empfangssignale in der Rechenstufe 80 werden in der Zusammenfassungsschaltung 82 acht Empfangspegel der acht Teilbasen 71, 72, ... 78 an die Frequenzaufteilungsschaltung 200, 201 angelegt. Frequenz- und Bandbreite des Sonarimpulses liegen im Empfangsfrequenzbereich, der von den drei Teilbändern L, M und H abgedeckt wird. Abhängig von der Bandbreite liefert mindestens eines der drei Ausgabeneuronen der Unternetze 100L, 100M, 100H die Einfallsrichtung des Sonarimpulses an die Anzeige 90.

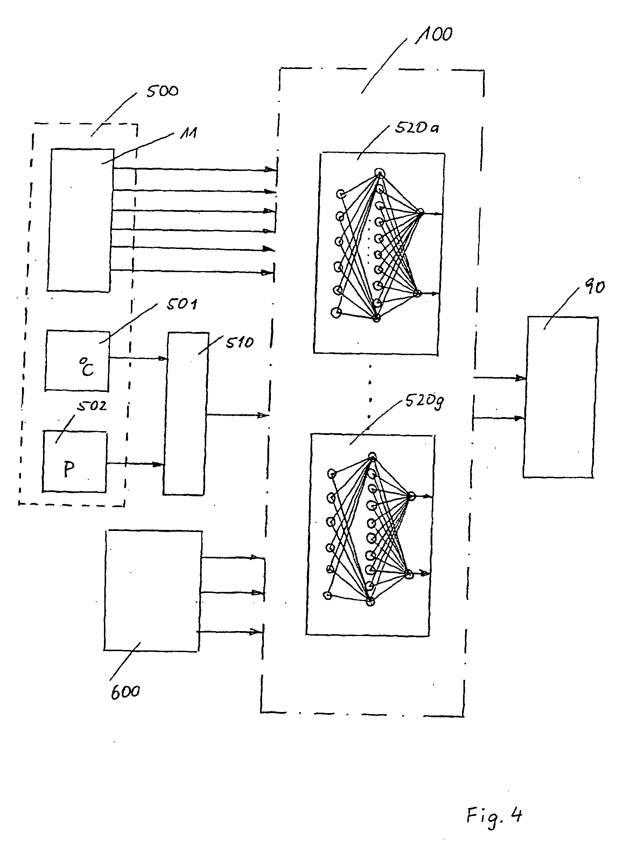

Das Training und den Einsatz von Unternetzen im neuronalen Netz 100 nach wählbaren Umgebungsparametern für die Empfangsanordnung zeigt Fig. 4 im Zusammenhang mit der Interceptbasis 11. In ihrem durchfluteten Hüllkörper 500 befinden sich ein Thermometer 501 und eine Druckdose 502. Über eine Aktivierungseinheit 510 wird abhängig von vorgebbaren Grenzwerten für Temperatur und/oder Druck eines der Unternetze 520a ... 520g aktiviert, das zuvor mit zugehörigen durch Simulation gewonnenen Trainingsdaten aus einem Datenspeicher 600 trainiert wurde, wobei zu jedem Meßpegelmuster der Sinus und Kosinus des zur Einfallsrichtung gehörenden Peilwinkels ausgegeben wird. Zwei Ausgabeneuronen in der output-layer jedes Unternetzes 520a ... 520g geben den Sinus und Kosinus des zum angelegten Empfangspegelmusters gehörenden Peilwinkels für die nachgeordnete Anzeige 90 an.

## Patentansprüche

1. Vorrichtung zum Bestimmen der Einfallsrichtung von zeitlich begrenzt auftretenden Schallwellen mit einer Empfangsanordnung einer Sonaranlage, bei der aus einer Vielzahl von Wandlern auf der Empfangsanordnung einzelne Wandler oder Teilbasen (31, 32, 33 bzw. 61, 62, 63 bzw. 71, 72, ... 78) mit ausgeprägten Eigenrichtcharakteristiken auswählbar sind, **dadurch gekennzeichnet, daß** simulierte oder bei Meßfahrten auf See ermittelte Meßpegel von über die Eigenrichtcharakteristiken empfangenen Schallwellen in einem Empfangsfrequenzbereich und zugehörige Einfallsrichtungen Trainingsdaten für ein neuronales Netz (100) bilden, daß das trainierte neuronale Netz (100) in die Sonaranlage integrierbar ist, daß Eingabeneuronen (101, 102, ... 108) des trainierten Netzes (100) mit Empfangspegeln der gleichen Wandler oder Teilbasen (31, 32, 33 bzw. 61, 62, 63 bzw. 71, 72, ... 78) beaufschlagt sind und ein Ausgabeneuron (130) des Netzes (100) die Einfallsrichtung als Ausgabewert angibt.

2. Vorrichtung nach Anspruch 1, **dadurch gekennzeichnet, daß** das neuronale Netz (100) als Feed Forward Netz ausgebildet ist, mit Supervised Learning trainiert ist und seine Aktivierungsfunktion nichtlinear ist.

3. Vorrichtung nach einem der Ansprüche 1 oder 2, **dadurch gekennzeichnet, daß** das Training an Bord mit der Sonaranlage erfolgt.

4. Vorrichtung nach einem der Ansprüche 1 bis 3, **dadurch gekennzeichnet, daß** die Empfangsanordnung eine in Segmente unterteilte zylinderförmige oder tonnenförmige Basis (13) zum Peilen von Sonarimpulsen ist.

5. Vorrichtung nach Anspruch 4, **dadurch gekennzeichnet, daß** der Sinus und Kosinus eines zur Einfallsrichtung gehörenden Peilwinkels zusammen mit den Meßpegeln der Teilbasen der in Segmente unterteilte Basis (13) Trainingsdaten des neuronalen Netzes (100) bilden, daß das neuronale Netz ein Ausgabeneuron für den Sinus des Peilwinkels und ein weiteres Ausgabeneuron für den Kosinus des Peilwinkels in seiner output-layer aufweist und daß beide Ausgabeneuronen die zum angelegten Empfangspegelmuster der Teilbasen gehörige Einfallsrichtung angeben.

6. Vorrichtung nach einem der Ansprüche 1 bis 3, **dadurch gekennzeichnet, daß** die Empfangsanordnung ein Conformal Array (70) oder ein Flank Array (30) oder eine aus je drei beidseitig angeordneten Teilbasen (61, 62, 63) bestehende Basis (60) ist und daß der Empfangsfrequenzbereich oberhalb eines Frequenzbereichs liegt, für den die Empfangsanordnung ausgelegt ist.

7. Vorrichtung nach einem der Ansprüche 1 bis 5, **dadurch gekennzeichnet, daß** Meßpegel von abgestrahlten breitbandigen Rauschimpulsen aus unterschiedlichen Einfallsrichtungen Trainingsdaten bilden.

8. Vorrichtung nach einem der Ansprüche 1 bis 6, **dadurch gekennzeichnet, daß** Meßpegel von abgestrahlten Transienten aus unterschiedlichen Einfallsrichtungen Trainingsdaten bilden.

**9.** Vorrichtung nach einem der Ansprüche 1 bis 8, **dadurch gekennzeichnet, daß** Meßpegelmuster für unterschiedliche Tauchtiefen und/oder Wassertemperaturen und/oder Einbaupositionen der Empfangsanordnung durch Simulation oder Meßfahrten bestimmbar sind.

**10.** Vorrichtung nach Anspruch 9, **dadurch gekennzeichnet, daß** das neuronale Netz mehrere gleich aufgebaute Unternetze aufweist und jedes Unternetz mit an wählbare physikalische Umgebungsparameter angepaßten unterschiedlichen Meßpegelmustern trainiert ist.

**11.** Vorrichtung nach einem der Ansprüche 1 bis 9, **dadurch gekennzeichnet, daß** eine Rechenschaltung (80) ein Zeittor für ein Zeitfenster, das an eine Laufzeit der Schallwelle über die größte Ausdehnung der Empfangsanordnung angepaßt ist, einen FFT-Analysator und eine nachgeordnete Normierungsschaltung aufweist, daß der Rechnerschaltung (80) eine Richtungs- und/oder Zusammenfassungsschaltung (82) zur Ermittlung der Meßpegel oder Empfangspegel im Empfangsfrequenzbereich nachgeschaltet ist.

**12.** Vorrichtung nach einem der Ansprüche 1 bis 11, **dadurch gekennzeichnet, daß** Meßpegel oder Empfangspegel in einer Frequenzverteilerschaltung (200) in mehrere aneinander grenzende Teilbänder (low, middle, high) aufgeteilt sind und im neuronalen Netz (100) für jedes Teilband (low, middle, high) parallel ein neuronales Unternetz (100L, 100M, 100H) vorgesehen ist und jedes Unternetz (100L, 100M, 100H) mit Meßpegeln des Teilbandes (low, middle, high) trainiert ist.

**13.** Vorrichtung nach einem der Ansprüche 1 bis 12, **dadurch gekennzeichnet, daß** das neuronale Netz (100) oder die Unternetze (100L, 100M, 100H) nacheinander mit Trainingsdaten von in zufälliger Reihenfolge vorliegenden Einfallsrichtungen trainierbar sind.

**14.** Vorrichtung nach einem der Ansprüche 1 bis 13, **dadurch gekennzeichnet, daß** die Anzahl der Eingabeneuronen (101, 102, ... 108) in der input-layer des Netzes (100) oder Unternetzes (100L, 100M, 100H) gleich der Anzahl der Wandler oder Teilbasen ist, daß eine Vielzahl von Neuronen (111, 112, ... 120) in der hidden-layer des Netzes (100) oder Unternetzes (100L, 100M, 100H) größer als die Anzahl und kleiner als die doppelte Anzahl ist, daß die output-layer des Netzes (100) oder des Unternetzes (100L, 100M, 100H) jeweils ein oder zwei Ausgabeneuronen (130) enthält.

## Claims

**1.** Apparatus for determination of the incidence direction of sound waves which occur for a limited time, having a receiving arrangement of a sonar system, in which individual transducers or base elements (31, 32, 33 or 61, 62, 63, or 71, 72,...78) with pronounced intrinsic directivity characteristics can be selected from a large number of transducers on the receiving arrangement, **characterized in that** simulated measurement levels, or measurement levels which are determined during measurement at sea, of sound waves which are received via the intrinsic directivity characteristics form training data for a neural network (100) in a reception frequency band and for associated incidence directions, **in that** the trained neural network (100) can be integrated in the sonar system, **in that** input neurons (101, 102...108) of the trained network (100) have reception levels of the same transducers or base elements (31, 32, 33 or 61, 62, 63, or 71, 72...78) applied to them, and an output neuron (130) of the network (100) emits the incidence direction as an output value.

**2.** Apparatus according to Claim 1, **characterized in that** the neural network (100) is in the form of a feed forward network, is trained by means of supervised learning, and its activation function is non-linear.

**3.** Apparatus according to one of Claims 1 or 2, **characterized in that** the training is carried out on board using the sonar system.

**4.** Apparatus according to one of Claims 1 to 3, **characterized in that** the receiving arrangement is a cylindrical or barrel-shaped base (13), which is subdivided into segments, for finding the direction of sonar pulses.

**5.** Apparatus according to Claim 4, **characterized in that** the sine and cosine of a direction-finding angle which is associated with the incidence direction, together with the measurement levels of the base elements of the base (13) which is subdivided into segments, form training data for the neural network (100), **in that** the neural network has an output neuron for the sine of the direction-finding angle and has a further output neuron for the cosine of the direction-finding angle in its output layer, and **in that** the two output neurons indicate the incidence direction which is associated with the applied reception level patterns of the base elements.

**6.** Apparatus according to one of Claims 1 to 3, **characterized in that** the receiving arrangement is a conformal array (70) or a flank array (30), or a base (60) which in each case comprises three base elements (61, 62, 63) arranged on both sides, and **in that** the reception frequency band is higher than a frequency band for which the receiving arrangement is designed.

**7.** Apparatus according to one of Claims 1 to 5, **characterized in that** the measurement levels of transmitted broadband noise pulses from different incidence directions form training data.

**8.** Apparatus according to one of Claims 1 to 6, **characterized in that** measurement levels from transmitted transients from different incidence directions form training data.

**9.** Apparatus according to one of Claims 1 to 8, **characterized in that** measurement level patterns for different dive depths and/or water temperatures and/or installation positions of the receiving arrangement can be determined by simulation or by measurement runs.

**10.** Apparatus according to Claim 9, **characterized in that** the neural network has two or more identical sub-networks, and each sub-network is trained using different measurement level patterns which are matched to physical environmental parameters that can be selected.

**11.** Apparatus according to one of Claims 1 to 9, **characterized in that** a computation circuit (80) has a time port for a time window which is matched to a propagation time of the sound wave over the greatest extent of the receiving arrangement, has an FFT analyzer and has a downstream normalization circuit, and **in that** the computer circuit (80) is followed by a direction and/or combination circuit (82) for determination of the measurement levels or reception levels in the reception frequency band.

**12.** Apparatus according to one of Claims 1 to 11, **characterized in that** the measurement levels or reception levels are subdivided in a frequency distribution circuit (200) into two or more mutually adjacent sub-bands (low, middle, high), and a neural sub-network (100L, 100M, 100H) is provided in parallel for each sub-band (low, middle, high) in the neural network (100), and each sub-network (100L, 100M, 100H) is trained by means of measurement levels from the sub-band (low, middle, high).

**13.** Apparatus according to one of Claims 1 to 12, **characterized in that** the neural network (100) or the sub-networks (100L, 100M, 100H) can be trained successively using training data from incidence directions that are in a random sequence.

**14.** Apparatus according to one of Claims 1 to 13, **characterized in that** the number of input neurons (101, 102...108) in the input layer of the network (100) or sub-network (100L, 100M, 100H) is equal to the number of transducers or base elements, **in that** a large number of neurons (111, 112...120) in the hidden layer of the network (100) or sub-network (100L, 100M, 100H) is greater than that number and is less than twice that number, **in that** the output layer of the network (100) or of the sub-network (100L, 100M, 100H) in each case contains one or two output neurons (130).

**Revendications**

**1.** Dispositif pour déterminer l'angle d'incidence d'ondes acoustiques limitées dans le temps avec un dispositif de réception d'une installation sonar, dans laquelle on peut sélectionner parmi une pluralité de transducteurs sur le dispositif de réception des transducteurs ou bases partielles individuels (31, 32, 33 respectivement 61, 62, 63 respectivement 71, 72, ..., 78) avec des caractéristiques indiscutables d'orientation propre, **caractérisé en ce que** des niveaux de mesure simulés ou déterminés lors de trajets de mesure en mer d'ondes acoustiques reçues par les caractéristiques d'orientation propre forment dans un domaine de fréquences de réception et par des directions d'incidence associées des données d'entraînement pour un réseau neuronal (100), **en ce que** le réseau neuronal entraîné (100) peut être intégré dans l'installation sonar, **en ce que** des neurones d'entrée (101, 102, ..., 108) du réseau entraîné (100) sont alimentés avec des niveaux de réception des mêmes transducteurs ou bases partielles (31, 32, 33 respectivement 61, 62, 63 respectivement 71, 72, ..., 78) et un neurone de sortie (130) du réseau (100) indique l'angle d'incidence comme valeur de sortie.

2. Dispositif selon la revendication 1, **caractérisé en ce que** le réseau neuronal (100) est formé par un réseau Feed Forward [à action directe], est entraîné avec Supervised Learning [apprentissage contrôlé] et sa fonction d'activation n'est pas linéaire.

3. Dispositif selon l'une quelconque des revendications 1 ou 2, **caractérisé en ce que** l'entraînement à bord est effectué avec l'installation sonar.

4. Dispositif selon l'une quelconque des revendications 1 à 3, **caractérisé en ce que** le dispositif de réception est une base (13) en forme de tonneau ou de cylindre divisée en segments pour le repérage d'impulsions sonar.

5. Dispositif selon la revendication 4, **caractérisé en ce que** le sinus et le cosinus d'un angle de relèvement appartenant à la direction d'incidence forment avec les niveaux de mesure des bases partielles de la base (13) divisée en segments des données d'entraînement du réseau neuronal (100), **en ce que** le réseau neuronal présente dans sa couche de sortie un neurone de sortie pour le sinus de l'angle de relèvement et un autre neurone de sortie pour le cosinus de l'angle de relèvement et **en ce que** les deux neurones de sortie indiquent l'angle d'incidence appartenant au modèle de niveau de réception appliqué des bases partielles.

6. Dispositif selon l'une quelconque des revendications 1 à 3, **caractérisé en ce que** le dispositif de réception est un Conformal Array [Arrangement de nez] (70) ou un Flank Array [Arrangement de flanc] (30) ou une base (60) se composant chaque fois de trois bases partielles (61, 62, 63) disposées sur les deux côtés, et **en ce que** le domaine des fréquences de réception est situé au-dessus d'un domaine de fréquences pour lequel le dispositif de réception est conçu.

7. Dispositif selon l'une quelconque des revendications 1 à 5, **caractérisé en ce que** des niveaux de mesure d'impulsions de bruit à large bande émises en provenance de différentes directions d'incidence forment des données d'entraînement.

8. Dispositif selon l'une quelconque des revendications 1 à 6, **caractérisé en ce que** des niveaux de mesure d'ondes transitoires émises en provenance de différentes directions d'incidence forment des données d'entraînement.

9. Dispositif selon l'une quelconque des revendications 1 à 8, **caractérisé en ce que** des modèles de niveaux de mesure pour différentes profondeurs de plongée et/ou températures de l'eau et/ou positions de montage du dispositif de réception peuvent être déterminés par simulation ou par des trajets de mesure.

10. Dispositif selon la revendication 9, **caractérisé en ce que** le réseau neuronal présente plusieurs sous-réseaux de même structure et chaque sous-réseau est entraîné avec différents modèles de niveaux de mesure adaptés à des paramètres physiques ambiants pouvant être choisis.

11. Dispositif selon l'une quelconque des revendications 1 à 9, **caractérisé en ce qu'**un circuit de calculateur (80) présente une porte de temps pour une fenêtre de temps qui est adaptée à une durée de l'onde acoustique sur la plus grande étendue du dispositif de réception, un analyseur FFT [à transformée de Fourier rapide] et un circuit de normalisation installé à la suite, **en ce que** le circuit de calculateur (80) est suivi d'un circuit d'orientation et/ou de concentration (82) pour la détermination des niveaux de mesure ou des niveaux de réception dans le domaine des fréquences de réception.

12. Dispositif selon l'une quelconque des revendications 1 à 11, **caractérisé en ce que** des niveaux de mesure ou des niveaux de réception sont partagés, dans un circuit diviseur de fréquence (200), en plusieurs bandes partielles contiguës (basse, moyenne, haute) et il est prévu dans le réseau neuronal (100), pour chaque bande partielle (basse, moyenne, haute) en parallèle un sous-réseau neuronal (100L, 100M, 100H), et chaque sous-réseau (100L, 100M, 100H) est entraîné avec des niveaux de mesure de la bande partielle (basse, moyenne, haute).

13. Dispositif selon l'une quelconque des revendications 1 à 12, **caractérisé en ce que** le réseau neuronal (100) ou les sous-réseaux (100L, 100M, 100H) peuvent être entraînés l'un après l'autre avec des données d'entraînement de directions d'incidence se présentant en ordre aléatoire.

**14.** Dispositif selon l'une quelconque des revendications 1 à 13, **caractérisé en ce que** le nombre des neurones d'entrée (101, 102, ..., 108) dans la couche d'entrée du réseau (100) ou du sous-réseau (100L, 100M, 100H) est égal au nombre des transducteurs ou bases partielles, **en ce qu'**une pluralité de neurones (111, 112, ..., 120) dans la couche cachée du réseau (100) ou du sous-réseau (100L, 100M, 100H) est plus grande que le nombre et plus petite que le double du nombre, et **en ce que** la couche de sortie du réseau (100) ou du sous-réseau (100L, 100M, 100H) contient chaque fois un ou deux neurones de sortie (130).

Fig. 1

Fig. 2

Fig. 3

Fig. 4